# EUROPEAN PATENT SPECIFICATION

(11) **EP 3 109 992 B1**
(45) Date of publication and mention of the grant of the patent: **26.09.2018**
(21) Application number: 16171241.9
(22) Date of filing: 25.05.2016
(51) Int. Cl.: H02M 3/28, H02M 7/00, H02J 3/38, H02J 1/10, H02M 1/00, H02J 3/36

(54) **POWER CONVERSION APPARATUS AND WIND TURBINE GENERATION SYSTEM**
LEISTUNGSUMWANDLUNGSVORRICHTUNG UND TURBINENERZEUGUNGSSYSTEM
APPAREIL DE CONVERSION DE PUISSANCE ET SYSTÈME DE GÉNÉRATION DE TURBINE ÉOLIENNE

(30) Priority: 26.06.2015 JP 2015128220
(43) Date of publication of application: 28.12.2016
(73) Proprietor: Hitachi, Ltd., Tokyo 100-8280 (JP)
(72) Inventor: KURITA, Naoyuki, Tokyo 100-8280 (JP); ONDA, Kenichi, Tokyo 100-8280 (JP); ICHINOKURA, Osamu, Miyagi 980-8577 (JP); NAKAMURA, Kenji, Miyagi 980-8577 (JP)
(74) Representative: MERH-IP Matias Erny Reichl Hoffmann Patentanwälte PartG mbB

(56) References cited:
- EP-A2- 2 846 335
- CN-A- 104 917 394
- KR-A- 20100 104 665
- US-A1- 2010 231 342
- US-A1- 2011 286 580
- US-A1- 2014 104 027
- US-A1- 2014 307 481
- US-A1- 2014 375 414
- US-B1- 7 233 079

## Description

### BACKGROUND OF THE INVENTION

### Field of the Invention

The present invention relates to a power conversion apparatus with a function of boosting DC power voltage, and a wind turbine generation system.

Specifically, the present invention relates to technologies for reducing the number of components of the power conversion apparatus and the housing volume thereof used for collection and transmission of power generated by natural energy such as wind power in the form of DC, and further improving efficiency of power conversion.

### Description of Prior Art

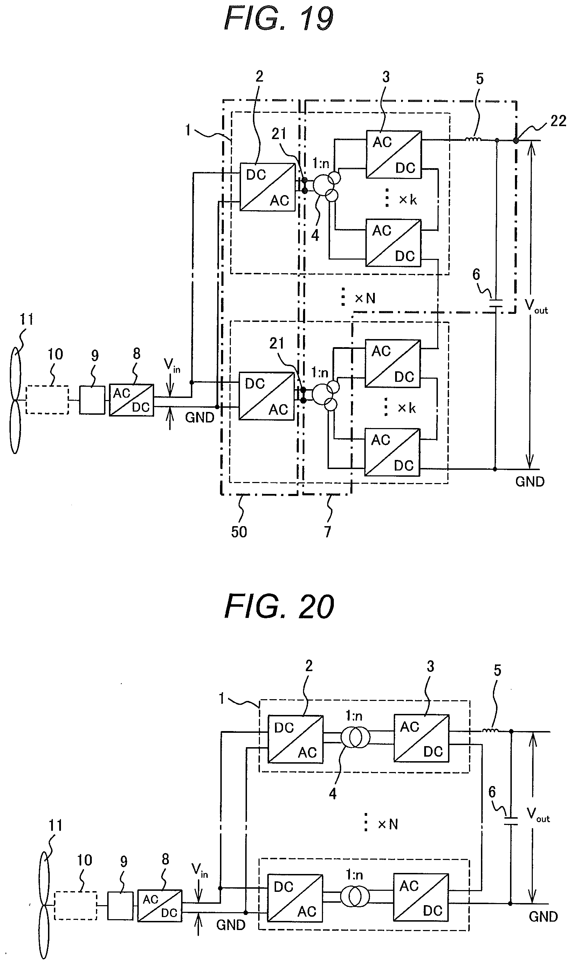

Fig. 20 shows a basic structure of a generally employed power conversion apparatus (DC-DC converter) which is configured to convert electric power generated by natural energy such as wind power into DC for boosting the DC voltage. The structure includes a wind turbine 11, a gear 10, a power generator 9, and a power conditioner 8 for converting the generated power into DC.

The DC-DC converter includes a plurality of unit modules 1 (hereinafter referred to as N modules) which are connected in parallel at the input side, and connected in series at the output side. Each of the respective modules 1 includes an input-side DC-AC conversion unit 2, an output-side AC-DC conversion unit 3, and a transformer 4 for connecting those conversion units.

The transformer 4 having its turn ratio set to 1:n is configured to multiply the input voltage Vin (generally, several kV) by n, and electrically insulate the input and the output sides. In the case where the voltage is not varied by the conversion units 2 and 3, the output voltage Vout of the DC-DC converter is boosted by multiplying Vin by n×N. The DC voltage output from the AC-DC conversion unit 3 generally has residual ripple. Therefore, it is passed through the filter circuit including a filter reactor 5 and a filter capacitor 6 so as to provide DC voltage having the ripple removed.

Each of the conversion units 2 and 3 may be an inverter circuit or a rectifier circuit including either a switching device such as IGBT or a diode. There has been a well-known technology to make the transformer compact by setting the AC voltage for excitation of the transformer 4 at high frequency equal to or higher than the commercial frequency.

For example, United States Patent Application Publication No. 2013/0197704 and No. 2012/0175962 disclose the offshore wind turbine generation system configured to combine the above-structured DC-DC converters to collect power generated by a plurality of wind turbine generation towers constructed on the sea in the DC state, and boost the power to high-voltage DC (HVDC) for long-distance power transmission to the land.

The large-scaled offshore wind turbine generation system which yields the total outputs reaching to several 100 MW is configured such that the output voltage Vout of the DC-DC converter is in the range from approximately 80 kV to 200 kV. There may cause potential differences between the ground, and the output-side AC-DC conversion unit 3 in the module 1 at the uppermost stage, the filter reactor 5 and the filter capacitor 6, respectively of the DC-DC converter shown in Fig. 20, each of which is substantially the same. Accordingly, it is necessary to take optimum measures for insulation. It is also necessary to take the similar measures for insulation between windings at the input side and output side of the transformer 4.

In the generally employed DC-DC converter, as the power device of the output-side AC-DC conversion unit 3 has restricted blocking voltage, it is difficult to increase the turn ratio n of the transformer 4. The number of modules N has to be increased to obtain the desired transformation ratio. This may cause the problem of increasing the number of the transformers 4 which occupy the largest volume of the module 1.

By making the AC voltage for excitation of the transformer 4 to high frequency equal to or higher than the commercial frequency, the transformer size may be reduced. However, proximity effect between the windings increases equivalent electric resistance of the winding at high frequency. As a result, the transformer loss may be increased, which causes the problem of lowering the efficiency of power conversion performed by the DC-DC converter.

In US 2014/307481 A1, a voltage conversion system is described. Voltage converter cells are controlled using interleaved phase-shift modulation signals and convert an input electrical current at an input voltage to an output electrical current at an output voltage.

In CN 104 917 394 A, a serial photovoltaic array is described. This document is a document under Art. 54(3) EPC.

In KR 2010 010 4665 A, a power converter and a power conversion system is described. The power converter includes three unit cells, each unit cell comprises an input terminal converter an output terminal converter and a transformer. An input terminal converter is connected to an AC power source and an output terminal converter is connected to an additional AC power source or AC motor.

### SUMMARY OF THE INVENTION

It is an object of the present invention to provide the appropriately compact power conversion apparatus, and a wind turbine generation system through application of the present invention especially to the wind turbine generation system.

To solve the problems, the features of the independent claim are suggested. Preferred developments are in the dependent claims.

According to the present invention, components of the DC-DC converter, which generate high potential are all stored in an insulation oil tank. This may eliminate the need of connecting the high-voltage conductor in the atmosphere, thus reducing the number of components and the housing volume.

According to an embodiment of the present invention, the output-side winding of the transformer which is excited at the high frequency in the DC-DC converter is divided into a plurality of windings so as to reduce the number of modules that constitute the DC-DC converter, resulting in reduced number of components and the housing volume. Furthermore, the input-side winding and the output-side winding of the transformer are alternately wound to lessen the proximity effect between the windings. This makes it possible to reduce the transformer loss and improve the efficiency of power conversion of the DC-DC converter.

### BRIEF DESCRIPTION OF THE DRAWINGS

Fig. 1 is a view of a power conversion apparatus according to a first embodiment of the present invention appropriately applied to a wind turbine generation facility;
Fig. 2A is a perspective view illustrating an inner structure of an insulation oil tank 7 of a DC-DC converter for wind turbine generation according to the first embodiment;
Fig. 2B is a front sectional view of the inner structure of the insulation oil tank 7 of the DC-DC converter for wind turbine generation according to the first embodiment;
Fig. 3 is a longitudinal sectional view illustrating a facility structure in a wind turbine generation tower, to which the present invention is applicable;
Fig. 4 is an exemplary system structure of a DC power collection and transmission wind turbine generation system;
Fig. 5 is an exemplary system structure of a DC power collection and transmission wind turbine generation system;
Fig. 6 is an exemplary system structure of a DC power collection and transmission wind turbine generation system;
Fig. 7 shows an exemplary circuit diagram of a DC-AC conversion unit 2, and an AC-DC conversion unit 3;
Fig. 8 shows an exemplary circuit diagram of the DC-AC conversion unit 2, and the AC-DC conversion unit 3;
Fig. 9 shows an exemplary circuit diagram of the DC-AC conversion unit 2, and the AC-DC conversion unit 3;
Fig. 10 shows an exemplary circuit diagram of the DC-AC conversion unit 2, and the AC-DC conversion unit 3;
Fig. 11 shows an exemplary circuit diagram of the DC-AC conversion unit 2, and the AC-DC conversion unit 3;
Fig. 12A is a longitudinal sectional view illustrating an exemplary structure of a multiple winding transformer 4;
Fig. 12B is a top view illustrating the exemplary structure of the multiple winding transformer 4;
Fig. 13 is a development view of a winding of the multiple winding transformer, which is wound around a single leg;
Fig. 14 is a connection diagram of the winding shown in Fig. 13;
Fig. 15 is a top view of a winding 42 wound around an iron core 41 of the multiple winding transformer;
Fig. 16A is an enlarged top view of a winding structure of a part A shown in Fig. 15;
Fig. 16B is a sectional view of the winding of the part A shown in Fig. 15;
Fig. 17 is a longitudinal sectional view illustrating an inner structure of the wind turbine generation tower according to a fourth embodiment;
Fig. 18 is a circuit block diagram of the DC-DC converter for wind turbine generation according to a fifth embodiment;
Fig. 19 is a circuit block diagram of the DC-DC converter for wind turbine generation according to a sixth embodiment; and
Fig. 20 is a circuit block diagram of a generally employed DC-DC converter for wind turbine generation.

### DETAILED DESCRIPTION OF THE INVENTION

Embodiments of the present invention will be described in detail referring to the drawings.

### First Embodiment

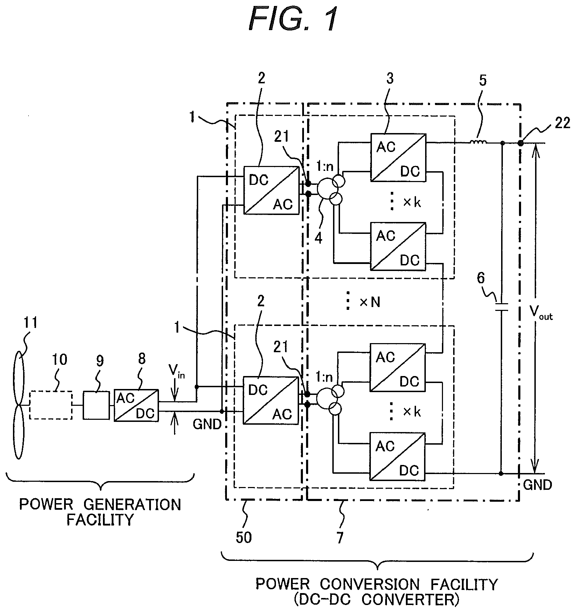

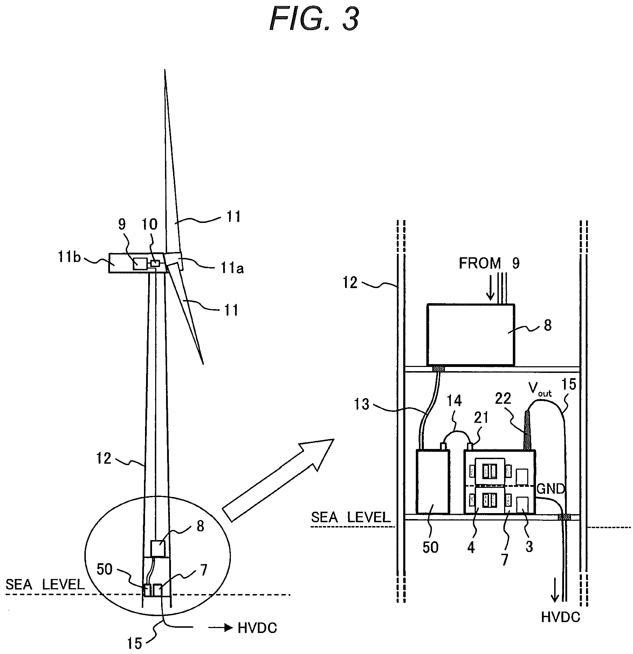

Fig. 1 is a view showing a power conversion apparatus according to a first embodiment of the present invention which has been applied to the wind turbine generation facilities. They are all disposed in a wind turbine generation tower to be described later in detail referring to Fig. 3.

The wind turbine generation facilities may be roughly classified into a power generation facility and a power conversion facility. The power generation facility includes a wind turbine 11, a gear 10, a power generator 9, and a power conditioner 8 for converting generated output into a DC. Meanwhile, the power conversion facility is constituted by the other components shown in the drawing, that is, circuits constituting the DC-DC converter. The power conversion facility (DC-DC converter) according to the first embodiment of the present invention is constituted by a plurality of modules as divided parts.

The DC-DC converter according to the first embodiment includes a plurality (N) of unit modules 1, which are connected in parallel at the input side, and connected in series at the output side. Each of the unit modules 1 includes an input-side DC-AC conversion unit 2, output-side AC-DC conversion units 3, and a multiple winding transformer 4 for connecting those conversion units. Output sides of the plurality of AC-DC conversion units 3 are connected in series, one DC output terminal of which is connected to a bushing 22 via a filter reactor 5, and the other DC output terminal is connected to a ground GND.

In the first embodiment according to the present invention, the DC-DC converter is constituted by a plurality (N) of unit modules 1, having a low-voltage section and a high-voltage section separately stored in individual housings. The high-voltage section is stored in the oil-immersed housing. Fig. 1 shows a low-voltage housing 50 and a high-voltage housing 7. The low-voltage housing 50 stores the DC-AC conversion units 2, and the high-voltage housing 7 stores the multiple winding transformers 4, the AC-DC conversion units 3, the filter reactor 5, and a filter capacitor 6.

Functions of the respective components of the DC-DC converter as shown in Fig. 1 will be described in detail. The typically designed DC-DC converter shown in Fig. 1 includes seven unit modules 1 (N=7), and the number of secondary windings of the multiple winding transformer 4 for connecting the DC-AC conversion units 2 and the AC-DC conversion units 3 is 5 (k=5). The code k corresponds to the number of the AC-DC conversion units 3 in the unit module 1.

The turn ratio of the multiple winding transformer 4 as the main component of the DC-DC converter is set to 1:n. The input voltage Vin (generally, several kV) of the input-side DC-AC conversion unit 2 is multiplied by n, and the input side and the output side are electrically insulated. It is preferable to set the AC voltage applied to the multiple winding transformer 4 at high frequency (for example, 1 kHz) equal to or higher than the commercial frequency by the DC-AC conversion unit 2.

The DC-DC converter has been designed especially considering the point as described below. The power semiconductor device as the component of the output-side AC-DC conversion unit 3 has the restricted blocking voltage. Increase in the turn ratio n of the multiple winding transformer 4 requires the plurality of power semiconductor devices to be connected in series. This may cause variation in characteristics among those power semiconductor devices. The measure by providing an additional snubber circuit for compensating the aforementioned effect has to be taken, thus leading to increased loss in the AC-DC conversion unit 3. It is therefore preferable to set the stage number N of the unit modules 1 to a large value for obtaining the desired transformation ratio. This indicates increase in the number of the multiple winding transformers 4 which occupy the largest volume of the unit module 1. The first embodiment is configured such that the multiple winding transformer 4 has its output-side winding divided into a plurality (k) of windings so that the respective windings are connected to the k output-side AC-DC conversion units 3.

The unit module 1 which constitutes the DC-DC converter includes one input-side DC-AC conversion unit 2, one multiple winding transformer 4, and k output-side AC-DC conversion units 3. Outputs from those k conversion units 3 are connected in series with one another.

In the case where the voltage is not varied by the DC-AC conversion unit 2 and the AC-DC conversion units 3, the output voltage Vout of the DC-DC converter will be boosted by multiplying the input voltage Vin by n×k×N. The DC voltage output from the AC-DC conversion unit 3 generally has the residual ripple. The voltage is passed through the filter circuit including the filter reactor 5 and the filter capacitor 6 so as to obtain the DC voltage with the ripple removed.

In the DC-DC converter according to the first embodiment, the potential difference substantially equivalent to Vout (approximately from 80 kV to 200 kV) will be generated between the ground GND and the output-side AC-DC conversion unit 3 in the module 1 at the uppermost stage, the filter reactor 5, and the filter capacitor 6, and between windings of the multiple winding transformer 4 at the input side and the output side. In order to achieve electrical connection between the respective components in the atmosphere, it is necessary to ensure sufficient insulation distance. This may increase the number of the components such as bushing, and the housing volume of the apparatus. The problem of the housing volume increase may become a major obstacle to installation of the DC-DC converter in the narrow wind turbine generation tower as the wind turbine generation facility.

In the first embodiment, the output-side AC-DC conversion units 3 and the multiple winding transformers 4 which constitute all the unit modules 1, the filter reactor 5 and the filter capacitor 6 are stored in the single insulation oil tank 7. The tank 7 (High Voltage housing) includes a plurality of low-voltage AC terminals 21, and a bushing 22 for outputting a high-voltage DC (HVDC). The low-voltage AC terminals 21 are connected to the housing 50 (Low Voltage housing) which stores the N input-side DC-AC conversion units 2. The DC-AC conversion unit 2 only generates the potential difference corresponding to the ground potential and the input voltage Vin (generally, several kV). It is therefore possible to store the N DC-AC conversion units 2 in the housing 50, while having the respective wirings connected in the atmosphere.

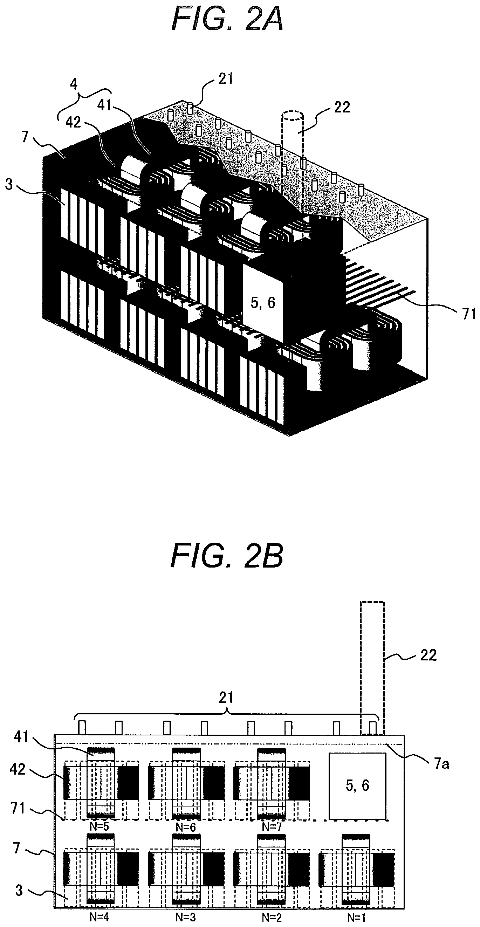

Fig. 2A is a perspective view, and Fig. 2B is a front sectional view of an inner structure of the insulation oil tank 7 of the DC-DC converter for wind turbine generation according to the first embodiment of the present invention. In the illustrated case, the number N of the unit modules 1 is set to 7, and the number k of the output-side AC-DC conversion units 3 is set to 5. However, such numbers are not limited to those in the aforementioned case. The first embodiment is configured to dispose a partition 71 inside the insulation oil tank 7, and four multiple winding transformers 4 each including an iron core 41 and a winding 42 below the partition 71, and three multiple winding transformers above the partition. Five output-side AC-DC conversion units 3 are disposed for each of the unit modules 1 to the front of the respective multiple winding transformers 4. There are 35 AC-DC conversion units 3 in total in the tank 7. The region above the partition 71 accommodates the filter reactor 5 and the filter capacitor 6 which are connected to the high-voltage DC bushing 22 disposed outside the insulation oil tank 7. The low-voltage AC terminals 21 corresponding to the number of the unit modules 1 are disposed on the top part of the tank 7. The drawing shows an oil level 7a, indicating that all components as described above are immersed in the insulation oil.

Fig. 3 is a longitudinal sectional view of the inner facility structure of the wind turbine generation tower to which the present invention is applicable. The left section of the drawing is a longitudinal sectional view of an overall structure of a wind turbine generation tower 12, and the right section is an enlarged longitudinal sectional view showing a part of the wind turbine generation tower 12 around the sea level.

The drawing shows the wind turbine 11, a rotor 11a, the gear 10, and the power generator 9. A nacelle 11b which stores the gear 10 and the power generator 9 is rotatably disposed horizontally at the top portion of the wind turbine generation tower 12.

Referring to the right section of the drawing showing the enlarged part of the lower structure of the wind turbine generation tower 12, the power conditioner 8 is disposed at the lower part of the wind turbine generation tower so that the AC output power from the power generator 9 at the top portion of the wind turbine generation tower is converted into the low-voltage (generally several kV) DC power. The DC power from the power conditioner 8 is input to the housing 50 (Low Voltage housing) which stores the input-side DC-AC conversion units of the DC-DC converter through a low-voltage DC cable 13. The low-voltage power which has been converted into AC at the frequency equal to or higher than the commercial frequency is input to the insulation oil tank 7 (High Voltage housing) through a low-voltage AC cable 14. The low-voltage AC power is converted into the high-voltage DC (HVDC) power by the multiple winding transformers 4 and the output-side AC-DC conversion units 3 which are stored in the tank 7, and output by an HVDC cable 15 via the HVDC bushing 22.

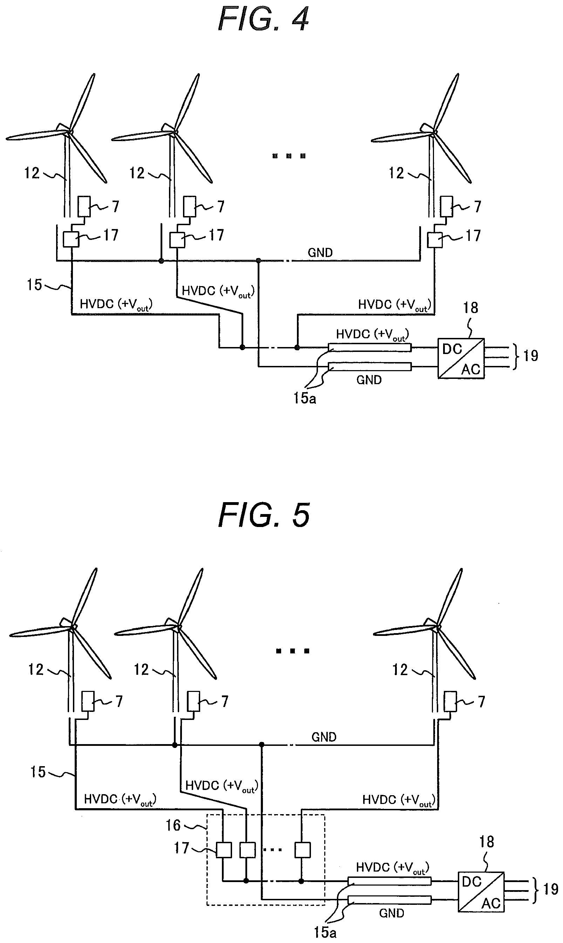

Fig. 3 shows the facility structure of the single wind turbine generation tower 12. Actually, a plurality of wind turbine generation towers 12 are often employed to constitute the DC power collection and transmission wind turbine generation system. Fig. 4 illustrates an exemplary connection structure configured to collect outputs from the plurality of wind turbine generation towers 12 as the DC power collection and transmission wind turbine generation system, which are externally output.

The example of the DC power collection and transmission wind turbine generation system shown in Fig. 4 is configured such that the HVDC power output from the insulation oil tanks 7 (High Voltage housing) in the plurality of wind turbine generation towers 12 on the sea is connected in parallel by the HVDC cable 15 via DC circuit breakers 17, and combined by HVDC power transmission cables 15a for long-distance electric power transmission to the land. The HVDC power transmitted to the land is converted into high-voltage commercial AC outputs 19 by an HVDC-commercial AC conversion unit 18 so as to be connected to an electric power system.

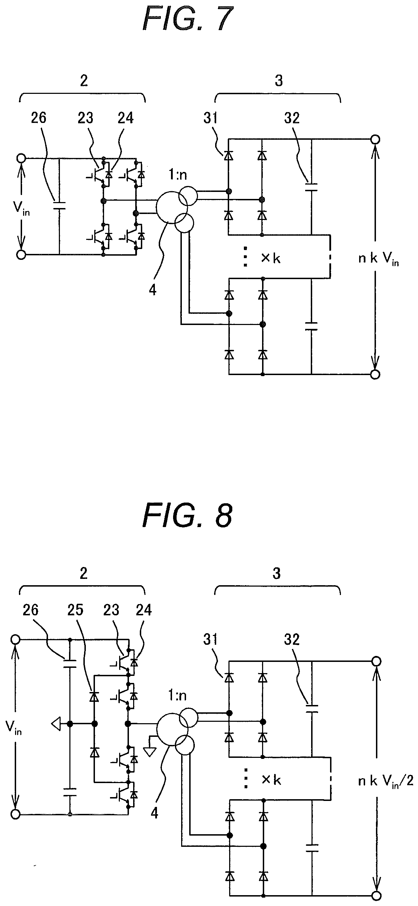

Examples of circuits of the input-side DC-AC conversion unit 2 and the output-side AC-DC conversion unit 3 as components of the DC-DC converter according to the present invention will be described referring to Figs. 7 to 11. Those examples may be applied to all the embodiments to be described below as well as the first embodiment.

Fig. 7 shows an example that a 2-level type full bridge inverter circuit is used as the input-side DC-AC conversion unit 2, and a rectifier circuit is used as the output-side AC-DC conversion unit 3. The input-side DC-AC conversion unit 2 includes four groups of switching devices 23 such as IGBT and free wheeling diodes 24, and an input capacitor 26 as components of the full bridge circuit. The AC voltage with amplitude of Vin at frequency equal to or higher than the commercial frequency is input to the multiple winding transformer 4. The AC voltage forms a time waveform such as a rectangular wave with arbitrary duty ratio, and a pulse width modulation wave (PWM wave) by controlling the signal input to the gate terminal of the switching device 23 such as IGBT. The AC voltages output from k divided output-side windings of the multiple winding transformer 4 are input to the output-side AC-DC conversion units 3 connected in series with k groups of rectifier circuits constituted by four rectifier diodes 31, and one output capacitor 32, respectively for conversion into the DC voltage boosted through multiplication of Vin by n×k.

Fig. 8 shows an example that a 3-level type half bridge inverter circuit is used as the input-side DC-AC conversion unit 2, and the rectifier circuit is used as the output-side AC-DC conversion unit 3. The input-side DC-AC conversion unit 2 includes four groups of switching devices 23 such as IGBT and the free wheeling diodes 24, two clamp diodes 25, and two input capacitors 26 as components of the half bridge circuit. The AC voltage with amplitude 1/2 of Vin at frequency equal to or higher than the commercial frequency is input to the multiple winding transformer 4. The AC voltage forms the time waveform such as the rectangular wave with arbitrary duty ratio, and the pulse width modulation wave (PWM wave) by controlling the signal input to the gate terminal of the switching device 23 such as IGBT. The AC voltages output from k divided output-side windings of the multiple winding transformer 4 are input to the output-side AC-DC conversion units 3 connected in series with k groups of rectifier circuits constituted by four rectifier diodes 31 and the one output capacitor 32, respectively for conversion into the DC voltage boosted through multiplication of Vin by n×k/2.

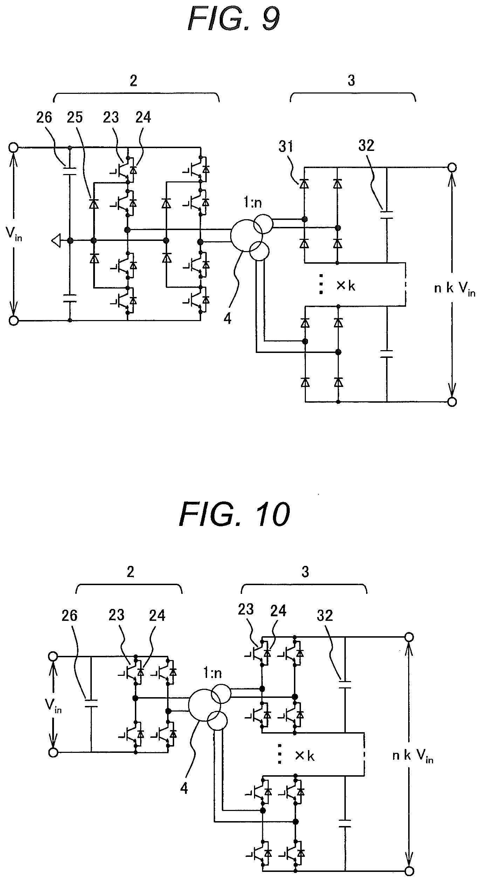

Fig. 9 shows an example that a 3-level type full bridge inverter circuit is used as the input-side DC-AC conversion unit 2, and the rectifier circuit is used as the output-side AC-DC conversion unit 3. The input-side DC-AC conversion unit 2 includes eight groups of switching elements 23 such as IGBT and the load commutation diodes 24, four clamp diodes 25, and two input capacitors 26 as components of the 3-level full bridge circuit. The AC voltage with amplitude of Vin at frequency equal to or higher than the commercial frequency is input to the multiple winding transformer 4. The AC voltage forms the time waveform such as the rectangular wave with arbitrary duty ratio and the pulse width modulation wave (PWM wave) by controlling the signal input to the gate terminal of the switching device 23 such as IGBT. The AC voltages output from k divided output-side windings of the multiple winding transformer 4 are input to the output-side AC-DC conversion units 3 connected in series with k groups of rectifier circuits each constituted by four rectifier diodes 31, and the one output capacitor 32, respectively for conversion into the DC voltage boosted through multiplication of Vin by n×k.

Fig. 10 shows an example that both a 2-level type full bridge inverter circuit and a converter circuit are used as the input-side DC-AC conversion unit 2 and the output-side AC-DC conversion units 3, respectively. The full bridge circuit is constituted by four groups of switching devices 23 such as IGBT and the free wheeling diodes 24, and the one input capacitor 26 or the one output capacitor 32. The AC voltage with amplitude of Vin at frequency equal to or higher than the commercial frequency is input to the multiple winding transformer 4. The AC voltage forms the time waveform such as the rectangular wave with arbitrary duty ratio and the pulse width modulation wave (PWM wave) by controlling the signal input to the gate terminal of the switching device 23 such as IGBT of the input-side conversion unit 2. The AC voltages output from the k divided output-side windings of the multiple winding transformer 4 are input to the output-side AC-DC conversion unit 3 connected in series with k groups of full bridge type converter circuits for conversion into the DC voltage boosted through multiplication of Vin by n×k. The phase between the k groups of circuits is adjusted by controlling the signal input to the gate terminal of the switching devices 23 such as IGBT as components of the output-side AC-DC conversion unit 3, allowing conversion into the DC voltage with less ripple.

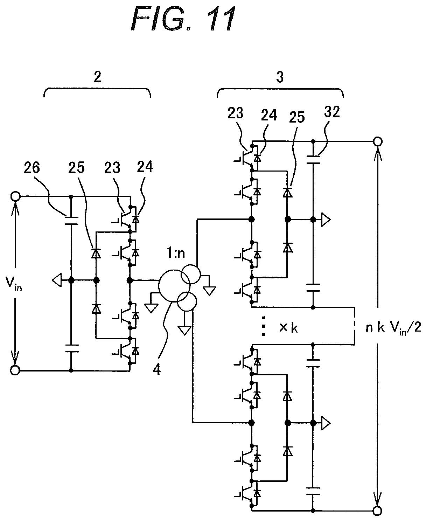

Fig. 11 shows an example that both a 3-level type half bridge inverter circuit and a converter circuit are used as the input-side DC-AC conversion unit 2 and the output-side AC-DC conversion units 3, respectively. The half bridge circuit is constituted by four groups of switching devices 23 such as IGBT and the free wheeling diodes 24, two clamp diodes 25, and two input capacitors 26, or two output capacitors 32. The AC voltage with amplitude of 1/2 of Vin at frequency equal to or higher than the commercial frequency is input to the multiple winding transformer 4. The AC voltage forms the time waveform such as the rectangular wave with arbitrary duty ratio, and the pulse width modulation wave (PWM wave) by controlling the signal input to the gate terminal of the switching device 23 such as IGBT of the input-side conversion unit 2. The AC voltages output from k divided output-side windings of the multiple winding transformer 4 are input to the output-side AC-DC conversion units 3 connected in series with k groups of half bridge type converter circuits for conversion into the DC voltage boosted through multiplication of Vin by n×k. The phase between k groups of the circuits is adjusted by controlling the signal input to the gate terminal of the switching element 23 such as IGBT for constituting the output-side AC-DC conversion unit 3, allowing conversion into the DC voltage with less ripple.

The circuit combinations as described referring to Figs. 7 to 11 are not limited to those described above. The circuit combination which is different from those shown in the drawings, or arbitrary combination of the inverter, the converter, and the rectifier circuit which are not described in the present invention may also provide the similar effects to those derived from the present invention.

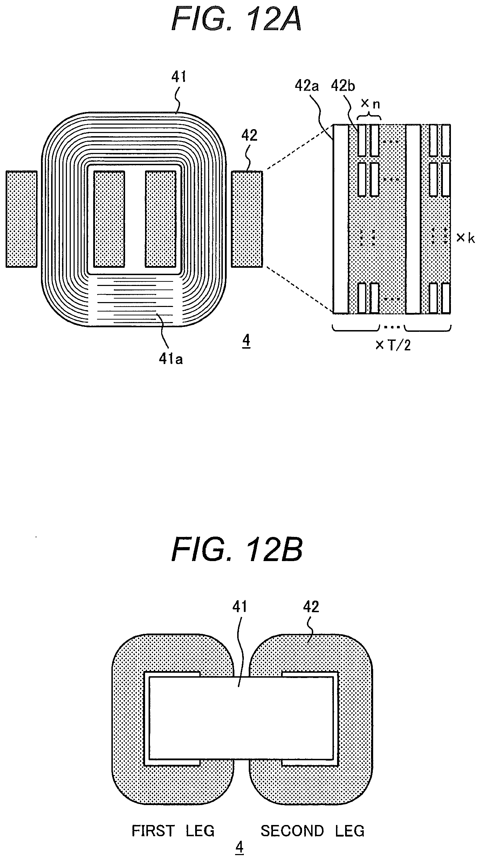

An example of the multiple winding transformer 4 which constitutes the DC-DC converter according to the present invention will be described referring to Figs. 12 to 16. The example to be explained herein is applicable to all embodiments to be described later as well as the present embodiment.

Fig. 12A is a longitudinal sectional view, and Fig. 12B is a top view, respectively illustrating a structure of the multiple winding transformer 4 in the DC-DC converter according to the present invention. The multiple winding transformer 4 includes a single-phase iron core 41, and two windings 42 wound with legs located at two positions, respectively. The iron core 41 is constituted by the winding iron core with a lap joint 41a formed by layering a plurality of thin strip-like magnetic materials while having one open end, and closing the open end after insertion of the windings 42. Preferably, the thin strip-like magnetic material is the amorphous alloy containing iron as the main component with less magnetic loss (iron loss) at high frequency equal to or higher than the commercial frequency.

The winding 42 wound around the leg of the iron core 41 is made of a plate-like winding material. An input-side (primary) winding 42a and n groups of output-side (secondary) windings 42b as the k divided windings in the longitudinal direction are wound alternately. The code n denotes the turn ratio of the output-side winding to the input-side winding. In the drawing, n is set to 2 (n=2) for clear understanding. Assuming that the number of windings of the input-side winding is set to T, the winding group with the aforementioned structure is wound T/2 times around the leg at the single position. In this way, as the input-side winding 42a and the output-side winding 42b of the multiple winding transformer 4 are alternately wound, the proximity effect between the windings is lessened. This makes it possible to reduce the transformer loss, thus improving efficiency of power conversion of the DC-DC converter.

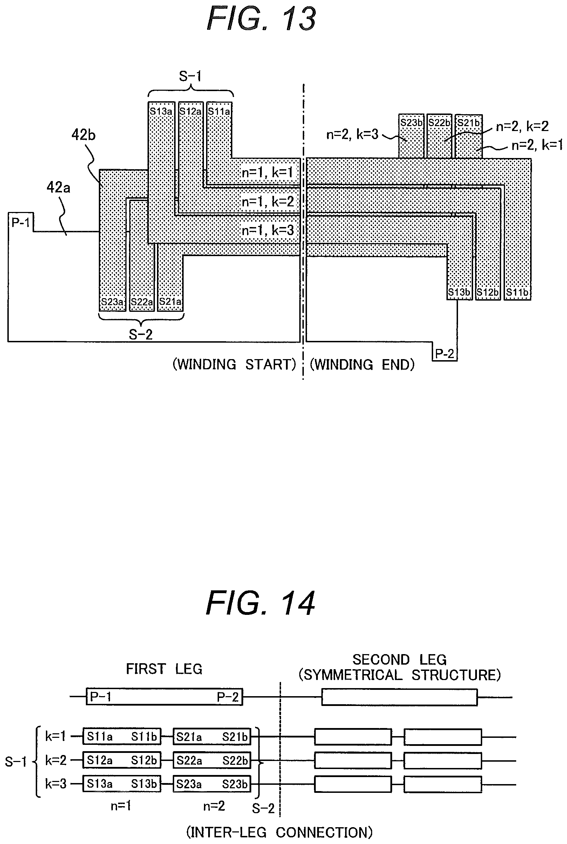

Fig. 13 is a development view of the winding wound around the single leg of the multiple winding transformer in the DC-DC converter according to the present invention. Fig. 14 is a connection diagram of the winding. In the drawing, k is set to 3 (k=3), and n is set to 2 (n=2) for clear understanding. Each of the plate-like input-side winding 42a and the output-side windings 42b is provided with an electrode structured to protrude upward or downward of the winding structure at each terminal end of winding start and winding end. Codes attached to the respective electrodes shown in Fig. 13 correspond to those shown in Fig. 14. The connection of the second leg shown in the drawing is made to be symmetrical with the first leg. The respective electrodes of the windings wound around the first and the second legs are connected by means of the conducting material with appropriate cross-section area.

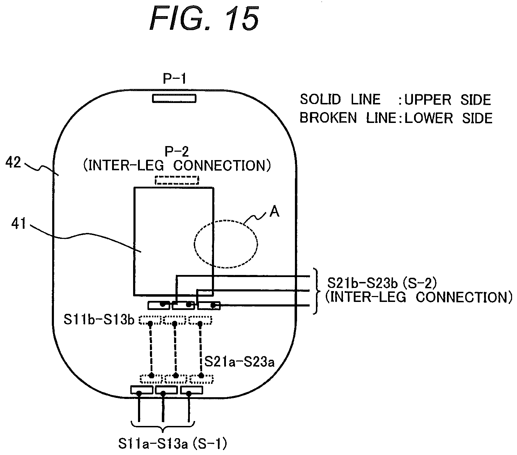

Fig. 15 is a top view of the winding 42 wound around the iron core 41 of the multiple winding transformer in the DC-DC converter according to the present invention, indicating arrangement and interconnection of the winding electrodes. The electrode indicated by the solid line protrudes upward of the winding, and the electrode indicated by a broken line protrudes downward of the winding. The electrodes P-1 and P-2 of the input-side winding are disposed opposite the electrode groups S-1 and S-2 of the output-side winding with respect to the iron core 41 while ensuring sufficient insulation distance. The electrode group of S11a, S12a, S13a at the winding end of the output-side winding corresponding to n=1, and the electrode group of S21a, S22a, S23a at the winding start of the output-side winding corresponding to n=2 are connected at the lower side of the winding by means of the conducting material with appropriate cross-section area.

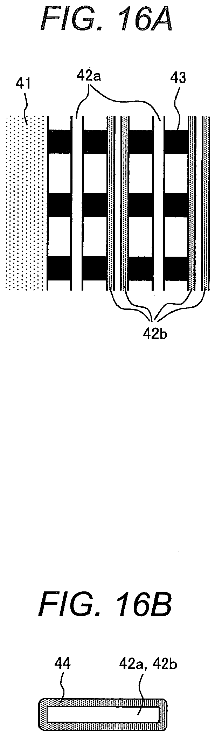

Fig. 16A is an enlarged top view of the winding structure of a part A shown in Fig. 15, and Fig. 16B is a sectional view of the winding. The input-side winding 42a is disposed closest to the iron core 41, and the output-side windings 42b by the number equivalent to the turn ratio n (in this case, n=2) and the input-side windings 42a are alternately wound outward. The potential difference corresponding to the difference, at most, between the output voltage Vout (generally in the range from approximately 80 kV to 200 kV) and the input voltage Vin (generally several kV) is generated between the windings 42a and 42b. An insulation material 43 is disposed for maintaining the appropriate insulation distance between those windings. Preferably, the insulation material is formed into substantially rectangular bar-like member so as to be interposed between the windings 42a and 42b while maintaining the predetermined interval for allowing circulation of the insulation oil through the respective gaps.

As Fig. 16B shows, it is preferable to coat the windings 42a, 42b with insulation paper 44 with appropriate thickness so as to be wound around the legs. Combination of the withstand voltage feature derived from the insulating paper with the spatial distance in the insulation oil ensured by the insulation material 43 provides the insulation strength between the windings 42a and 42b.

The present invention is intended to be applied to the wind turbine generation facility to provide the preferable power conversion apparatus (DC-DC converter). Firstly, for achieving the object, a plurality (N) of unit modules 1 are employed, and the DC-AC conversion unit 2 and the AC-DC conversion unit 3 are connected through the multiple winding transformer 4. This makes it possible to reduce the volume by approximately 20% compared with the generally employed structure as shown in Fig. 20. Secondly, the HV components of the DC-DC converter are immersed with oil in the housing, which makes it possible to further reduce the volume by approximately 10% in the end.

### Second Embodiment

The example of the DC power collection and transmission wind turbine generation system has been described referring to Fig. 4. It is also possible to configure the DC power collection and transmission wind turbine generation system as illustrated in Fig. 5.

Fig. 5 is a system diagram of the DC power collection and transmission wind turbine generation system according to a second embodiment of the present invention. Each of the plurality of wind turbine generation towers 12 contains the same devices as those described in the first embodiment referring to Fig. 3 so that HVDC power is generated via the HVDC cable 15. An offshore platform 16 constructed on the sea is configured to collect the HVDC power from the respective wind turbine generation towers 12, which will be connected in series via the DC circuit breaker 17 disposed on the offshore platform. The power is combined by the HVDC power transmission cable 15a for long-distance electric power transmission to the land. The HVDC power transmitted to the land is converted into the high-voltage commercial AC output 19 by the HVDC-commercial AC conversion unit 18 so as to be connected to the power system.

### Third Embodiment

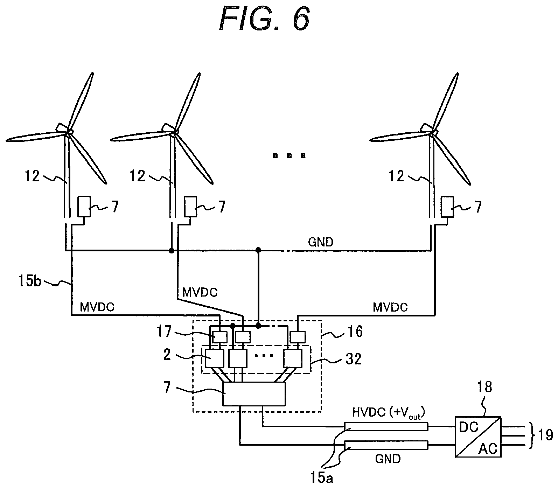

Fig. 6 is a system diagram of the DC power collection and transmission wind turbine generation system according to a third embodiment of the present invention. In the third embodiment, the DC power output from the plurality of wind turbine generation towers 12 is at the medium voltage (MVDC, generally from approximately 10 kV to 60 kV). Each of the wind turbine generation towers 12 may be configured to include the DC-DC converter structured as shown in Fig. 3, and make the boosting ratio smaller than those of the systems described in the first and the second embodiments for outputting the MVDC power. The MVDC power is collected by the offshore platform 16 via an MVDC cable 15b, and further input to the respective input-side DC-AC conversion units 2 inside the housing 50 via the DC circuit breaker 17. The AC power output from the housing 50 is input to the insulation oil tank 7 which stores the plural transformers, the plurality of output-side AC-DC conversion units, and the filter elements for conversion into the HVDC power for the long-distance electric power transmission to the land through the HVDC power transmission cable 15a. The HVDC power transmitted to the land is converted into the high-voltage commercial AC output 19 by the HVDC-commercial AC conversion unit 18 so as to be connected to the power system.

### Fourth Embodiment

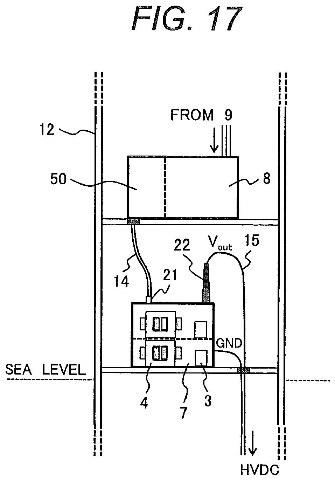

Fig. 17 is a longitudinal sectional view showing the structure of the wind turbine generation tower 12 according to a fourth embodiment of the present invention at a part around the sea level. The AC power output from the power generator 9 of the wind turbine generation tower 12 is converted into the low-voltage (generally, several kV) DC power by the power conditioner 8. The DC power from the power conditioner 8 is input to the housing 50 which stores the input-side DC-AC conversion units of the DC-DC converter. In the fourth embodiment, the housing 50 is integrated with the power conditioner 8.

The low-voltage power which are converted into AC at the frequency equal to or higher than the commercial frequency is input to the insulation oil tank 7 through the low-voltage AC cable 14. The low-voltage AC power is converted into the high-voltage DC (HVDC) power by the multiple winding transformers 4 and the output-side AC-DC conversion units 3 in the insulation oil tank 7, and output through the HVDC cable 15 via the HVDC bushing 22. The structure as described in this embodiment allows storage of the low-voltage system and the high-voltage system in the independent housings in the wind turbine generation tower 12. Both housings are disposed on the different floors so as to allow more effective use of the inner space of the tower, resulting in enhanced safety upon maintenance of the devices.

### Fifth Embodiment

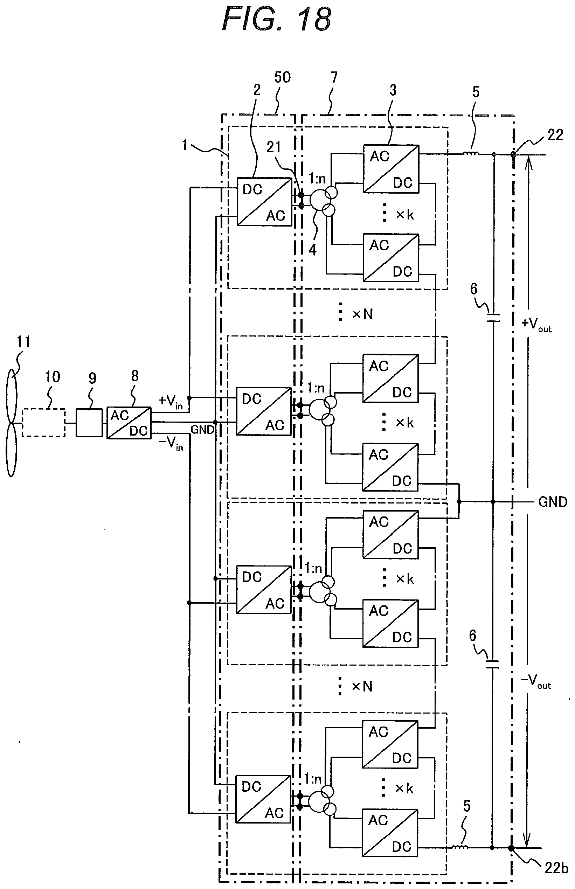

Fig. 18 is a circuit block diagram of the DC-DC converter for wind turbine generation according to a fifth embodiment of the present invention. Detailed explanations of the same codes and functions as those of the circuit block diagram according to the first embodiment shown in Fig. 1 will be omitted. In the fifth embodiment, each low-voltage DC power output from the power conditioner 8 at +Vin and -Vin is input to the housing 50 having a plurality of input-side DC-AC conversion units 2 stored therein. The DC-DC converter 1 with the same structure as the one described in the first embodiment performs conversion into high-voltage DC (HVDC) at +Vout and -Vout, respectively. The single insulation oil tank 7 stores the plurality of multiple winding transformers 4, the plurality of output-side AC-DC conversion units 3, the filter reactors 5, and the filter capacitors 6 as components of the DC-DC converter. The insulation oil tank includes a plurality of low-voltage AC terminals 21, and two bushings 22, 22b for outputting the HVDC power at +Vout and -Vout, respectively.

### Sixth Embodiment

Fig. 19 is a circuit block diagram of the DC-DC converter for wind turbine generation according to a sixth embodiment of the present invention. Detailed explanations of the same codes and functions as those of the circuit block diagram according to the first embodiment shown in Fig. 1 will be omitted. In the embodiment, the single insulation oil tank 7 stores the multiple winding transformers 4, arbitrary numbers of the output-side AC-DC conversion units 3 at the upper stage, the filter reactor 5, and the filter capacitor 6 as all components of the DC-DC converter. Since the potential generated between the output-side AC-DC conversion unit 3 at the lower stage and the ground is sufficiently lower than the HVDC, such conversion unit may be disposed in the atmosphere without being stored in the insulation oil tank 7 with no problems. By disposing some of the output-side AC-DC conversion units 3 as components of the DC-DC converter in the atmosphere, probability of the failure which occurs in the conversion unit stored in the insulation oil tank may be reduced, thus lessening time and labor needed for replacement.

The respective embodiments according to the present invention may be employed independently, or may be arbitrarily combined to provide the similar advantageous effects to those derived from the present invention.

## Claims

1. A power conversion apparatus comprising:
a plurality (N) of unit modules (1) each including:
a DC-AC conversion unit (2) for converting a direct current into an alternating current;
a transformer (4) for receiving the alternating current converted by the DC-AC conversion unit (2); and
a plurality (k) of AC-DC conversion units (3) for converting the alternating current from the transformer (4) into the direct current, wherein the plurality (N) of unit modules (1) are connected in parallel at an input side of the DC-AC conversion unit (2), **characterized in that** the plurality (N) of unit modules (1) are connected in series at an output side of the AC-DC conversion unit (3);
the transformer (4) in each of the unit modules (1) is a multiple winding transformer (4) having a plurality (k) of secondary windings;
the secondary windings are connected to respective inputs of the AC-DC conversion units (3);
outputs from the plurality (k) of the AC-DC conversion units (3) are connected in series; and
high-voltage circuits in the plurality (N) of unit modules (1) are all stored in an oil-immersed housing.

2. The power conversion apparatus according to claim 1, wherein the high-voltage circuits include the multiple, winding transformers (4) and the AC-DC conversion units (3).

3. The power conversion apparatus according to claim 1 or 2, comprising a first housing (50) which stores the DC-AC conversion units (2), and wherein
the second housing (7) stores the multiple winding transformers (4) and the AC-DC conversion units (3)

4. The power conversion apparatus according to claim 1,
wherein the transformers (4), the AC-DC conversion units (3) in the plurality (N) of modules (1), and filter elements connected to the output side of the module (1) are stored in a single insulation oil tank (7), wirings in the respective modules (1), between the modules (1), and between the module (1) and the filter element are connected in the insulation oil tank (7), and an AC terminal (21) for input, and a DC bushing (22) for output are disposed outside the insulation oil tank (7).

5. The power conversion apparatus according to claim 4, wherein the AC-DC conversion units (3) in the module (1) among the plurality (N) of modules (1), which are the closest to a ground potential, are disposed outside the insulation oil tank (7).

6. The power conversion apparatus according to any one of claims 4 and 5, wherein an input-side winding (42a) and an output-side winding (42b) of the transformer (4) in each of the modules (1) are alternately wound while held spaced apart by a predetermined distance for insulation.

7. The power conversion apparatus according to any one of claims 4 to 6, wherein each of the input-side winding (42a) and the output-side winding (42b) of the transformer (4) in the respective modules (1) is made of a conducting material having substantially a rectangular cross section, and is coated with insulation paper as an insulation material.

8. The power conversion apparatus according to any one of claims 4 to 7, wherein each terminal end of the input-side winding (42a) and the output-side winding (42b) of the transformer (4) in the respective modules (1) is provided with an electrode (P-1, P-2, S11a-S13a, S21aS23a) which protrudes upward or downward, and a conducting material with a predetermined cross section area is used for connection between the electrodes (S11a-S13a, S21aS23a) .

9. The power conversion apparatus according to any one of claims 4 to 8, wherein the transformer (4) in each of the modules (1) is subjected to excitation at high frequency equal to or higher than commercial frequency, and an iron core (41) of the transformer (4) is a winding iron core (41) formed by winding a plurality of thin strip-like magnetic materials.

10. The power conversion apparatus according to any one of claims 4 to 9, wherein a thin strip-like alloy with an amorphous structure containing iron as a main component or a microcrystalline structure is employed for forming the iron core (41) of the transformer (4) in the module (1) .

11. The power conversion apparatus according to any one of claims 4 to 10, wherein the input-side DC-AC conversion unit (2) in the module is selected from a group including a 2-level full bridge type inverter circuit, a 3-level half bridge type inverter circuit, and a 3-level full bridge type inverter circuit, each of which includes a switching device (23) such as IGBT and a diode.

12. The power conversion apparatus according to any one of claims 4 to 11, wherein the output-side AC-DC conversion unit (3) in the module (1) is selected from a group including a 2-level full bridge type converter circuit, a 3-level half bridge type converter circuit, a 3-level full bridge type converter circuit, each of which includes a switching device (23) such as IGBT and a diode, and a rectifier circuit constituted by the diode.

13. A wind turbine generation system provided with the power conversion apparatus according to any one of claims 4 to 12, wherein a housing (50) which stores the input-side DC-AC conversion units (2) of the modules (1), and an insulating oil tank (7) which stores the transformers (4) and the output-side AC-DC conversion units (3) of all the modules (1) and the filter elements are disposed in a wind turbine generation tower (12) constructed on the sea so that generated power from the wind turbine generation tower (12) is converted into DC power for outputting.

14. A wind turbine generation system provided with the power conversion apparatus according to any one of claims 4 to 12, wherein outputs of DC power from the plurality of wind turbine generation towers (12) constructed on the sea are connected in parallel and collected at a single location through a plurality of DC circuit breakers (17) for transmission of the DC power to the land.

15. A wind turbine generation system provided with the power conversion apparatus according to any one of claims 4 to 12, wherein outputs of DC power from the plurality of wind turbine generation towers (12) constructed on the sea are collected to a platform (16) disposed on the sea through a plurality of DC circuit breakers (17), and a second power conversion apparatus provided on the platform (16) converts the power into a single system DC power for power transmission to the land.

## Patentansprüche

1. Leistungsumsetzvorrichtung, die Folgendes umfasst:
mehrere (N) Moduleinheiten (1), die jeweils Folgendes enthalten:
eine Gleichstrom-/Wechselstromumsetzungseinheit (2) zum Umsetzen eines Gleichstroms in einen Wechselstrom;
einen Transformator (4) zum Empfangen des Wechselstroms, der durch die Gleichstrom-/Wechselstromumsetzungseinheit (2) umgesetzt wurde; und
mehrere (k) Wechselstrom-/Gleichstromumsetzungseinheiten (3) zum Umsetzen des Wechselstroms von dem Transformator (4) in den Gleichstrom, wobei
die mehreren (N) Moduleinheiten (1) an einer Eingangsseite der Gleichstrom-/Wechselstromumsetzungseinheit (2) parallelgeschaltet sind, **dadurch gekennzeichnet, dass** die mehreren (N) Moduleinheiten (1) an einer Ausgangsseite der Wechselstrom-/Gleichstromumsetzungseinheit (3) in Reihe geschaltet sind;
der Transformator (4) in jeder der Moduleinheiten (1) ein Mehrwicklungstransformator (4) ist, der mehrere (k) Sekundärwicklungen besitzt;
die Sekundärwicklungen mit entsprechenden Eingängen der Wechselstrom-/Gleichstromumsetzungseinheiten (3) verbunden sind;
Ausgänge von den mehreren (k) Wechselstrom-/Gleichstromumsetzungseinheiten (3) in Reihe geschaltet sind; und
Hochspannungsschaltungen in den mehreren (N) Moduleinheiten (1) alle in einem Ölbadgehäuse untergebracht sind.

2. Leistungsumsetzvorrichtung nach Anspruch 1, wobei die Hochspannungsschaltungen die Mehrwicklungstransformatoren (4) und die Wechselstrom-/Gleichstromumsetzungseinheiten (3) enthalten.

3. Leistungsumsetzvorrichtung nach Anspruch 1 oder 2, die ein erstes Gehäuse (50) umfasst, in dem die Gleichstrom-/Wechselstromumsetzungseinheiten (2) untergebracht sind, wobei
in dem zweiten Gehäuse (7) die Mehrwicklungstransformatoren (4) und die Wechselstrom-/Gleichstromumsetzungseinheiten (3) untergebracht sind.

4. Leistungsumsetzvorrichtung nach Anspruch 1,
wobei die Transformatoren (4), die Wechselstrom-/Gleichstromumsetzungseinheiten (3) in den mehreren (N) Modulen (1) und die Filterelemente, die mit der Ausgangsseite des Moduls (1) verbunden sind, in einem einzelnen Isolationsöltank (7) untergebracht sind, Verdrahtungen in den entsprechenden Modulen (1), zwischen den Modulen (1) und zwischen dem Modul (1) und dem Filterelement in dem Isolationsöltank (7) verbunden sind und ein Wechselstromanschluss (21) zur Eingabe und eine Gleichstrombuchse (22) zur Ausgabe außerhalb des Isolationsöltanks (7) angeordnet sind.

5. Leistungsumsetzvorrichtung nach Anspruch 4, wobei die Wechselstrom-/Gleichstromumsetzungseinheiten (3) in dem Modul (1) unter den mehreren (N) Modulen (1), die am nächsten an einem Massepotential liegen, außerhalb des Isolationsöltanks (7) angeordnet sind.

6. Leistungsumsetzvorrichtung nach einem der Ansprüche 4 und 5, wobei eine eingangsseitige Wicklung (42a) und eine ausgangsseitige Wicklung (42b) des Transformators (4) in jedem der Module (1) abwechselnd gewickelt sind, während sie zur Isolation in einer vorgegebenen Entfernung beabstandet gehalten werden.

7. Leistungsumsetzvorrichtung nach einem der Ansprüche 4 bis 6, wobei die eingangsseitige Wicklung (42a) und die ausgangsseitige Wicklung (42b) des Transformators (4) in den entsprechenden Modulen (1) aus einem leitenden Material gebildet sind, das im Wesentlichen einen rechteckigen Querschnitt besitzt und mit Isolationspapier als ein Isolationsmaterial beschichtet ist.

8. Leistungsumsetzvorrichtung nach einem der Ansprüche 4 bis 7, wobei jedes Anschlussende der eingangsseitigen Wicklung (42a) und der ausgangsseitigen Wicklung (42b) des Transformators (4) in den entsprechenden Modulen (1) mit einer Elektrode (P-1, P-2, S11a-S13a, S21a-S23a) versehen ist, die nach unten oder nach oben vorsteht, und ein leitendendes Material mit einer vorgegebenen Querschnittsfläche für die Verbindung zwischen den Elektroden (S11a-S13a, S21a-S23a) verwendet wird.

9. Leistungsumsetzvorrichtung nach einem der Ansprüche 4 bis 8, wobei der Transformator (4) in jedem der Module (1) einer Erregung bei einer hohen Frequenz, die gleich oder höher als eine Netzfrequenz ist, unterworfen ist und ein Eisenkern (41) des Transformators (4) ein Wicklungseisenkern (41) ist, der durch Wickeln mehrerer dünner, streifenartiger Magnetmaterialien gebildet ist.

10. Leistungsumsetzvorrichtung nach einem der Ansprüche 4 bis 9, wobei eine dünne, streifenartige Legierung mit einer amorphen Struktur, die Eisen als eine Hauptkomponente enthält, oder eine mikrokristalline Struktur zum Bilden des Eisenkerns (41) des Transformators (4) in dem Modul (1) eingesetzt wird.

11. Leistungsumsetzvorrichtung nach einem der Ansprüche 4 bis 10, wobei die eingangsseitige Gleichstrom-/Wechselstromumsetzungseinheit (2) in dem Modul aus einer Gruppe gewählt ist, die eine zweistufige Wechselrichterschaltung des Vollbrückentyps, eine dreistufige Wechselrichterschaltung des Halbbrückentyps und eine dreistufige Wechselrichterschaltung des Vollbrückentyps enthält, von denen jede eine Schaltvorrichtung (23) wie z. B. ein IGBT oder eine Diode enthält.

12. Leistungsumsetzvorrichtung nach einem der Ansprüche 4 bis 11, wobei die ausgangsseitige Gleichstrom-/Wechselstromumsetzungseinheit (3) in dem Modul (1) aus einer Gruppe gewählt ist, die eine zweistufige Wechselrichterschaltung des Vollbrückentyps, eine dreistufige Wechselrichterschaltung des Halbbrückentyps und eine dreistufige Wechselrichterschaltung des Vollbrückentyps enthält, wovon jede eine Schaltvorrichtung (23) wie z. B. ein IGBT oder eine Diode und eine Gleichrichterschaltung, die durch die Diode gebildet ist, enthält.

13. Windkrafterzeugungssystem, das mit der Leistungsumsetzvorrichtung nach einem der Ansprüche 4 bis 12 versehen ist, wobei ein Gehäuse (50), in dem die eingangsseitigen Gleichstrom-/Wechselstromumsetzungseinheiten (2) der Module (1) untergebracht sind, und ein Isolationsöltank (7), in dem die Transformatoren (4), die ausgangsseitigen Wechselstrom-/Gleichstromumsetzungseinheiten (3) aller Module (1) und die Filterelemente untergebracht sind, in einem Windkrafterzeugungsturm (12) angeordnet sind, der auf See konstruiert ist, derart, dass von dem Windkrafterzeugungsturm (12) erzeugte Leistung zum Ausgeben in Gleichstromleistung umgesetzt wird.

14. Windkrafterzeugungssystem, das mit der Leistungsumsetzvorrichtung nach einem der Ansprüche 4 bis 12 versehen ist, wobei Gleichstromleistungsausgänge der mehreren Windkrafterzeugungstürme (12), die auf See aufgebaut sind, über mehrere Gleichstromleistungsschalter (17) für die Übertragung der Gleichstromleistung zum Land parallelgeschaltet sind und an einem einzelnen Ort zusammenlaufen.

15. Windkrafterzeugungssystem, das mit der Leistungsumsetzvorrichtung nach einem der Ansprüche 4 bis 12 versehen ist, wobei Gleichstromleistungsausgänge der mehreren Windkrafterzeugungstürme (12), die auf See aufgebaut sind, über mehrere Gleichstromleistungsschalter (17) an einer Plattform (16), die auf See angeordnet ist, zusammenlaufen und eine zweite Leistungsumsetzvorrichtung, die an der Plattform (16) vorgesehen ist, die Leistung in eine einzelne Systemgleichstromleistung für die Übertragung zum Land umsetzt.

## Revendications

1. Appareil de conversion de puissance comprenant :
une pluralité (N) de modules unitaires (1) incluant chacun :
une unité de conversion continu/alternatif (2) pour convertir un courant continu en un courant alternatif ;
un transformateur (4) pour recevoir le courant alternatif converti par l'unité de conversion continu/alternatif (2) ; et
une pluralité (k) d'unités de conversion alternatif/continu (3) pour convertir le courant alternatif provenant du transformateur (4) en un courant continu, dans lequel la pluralité (N) de modules unitaires (1) sont connectés en parallèle sur un côté d'entrée de l'unité de conversion continue/alternatif (2), **caractérisé en ce que** la pluralité (N) de modules unitaires (1) sont connectés en série sur un côté de sortie de l'unité de conversion alternatif/continu (3) ;
le transformateur (4) dans chacun des modules unitaires (1) est un transformateur à enroulements multiples (4) ayant une pluralité (k) d'enroulements secondaires ;
les enroulements secondaires sont connectés à des entrées respectives des unités de conversion alternatif/continu (3) ;
les sorties de la pluralité (k) des unités de conversion alternatif/continu (3) sont connectées en série ; et
des circuits à haute tension dans la pluralité (N) de modules unitaires (1) sont tous stockés dans un boîtier immergé d'huile.

2. Appareil de conversion de puissance selon la revendication 1, dans lequel les circuits à haute tension incluent les transformateurs à enroulements multiples (4) et les unités de conversion alternatif/continu (3).

3. Appareil de conversion de puissance selon la revendication 1 ou 2, comprenant un premier boîtier (50) qui stocke les unités de conversion continu/alternatif (2), et dans lequel
le second boîtier (7) stocke les transformateurs à enroulements multiples (4) et les unités de conversion alternatif/continu (3).

4. Appareil de conversion de puissance selon la revendication 1,
dans lequel les transformateurs (4), les unités de conversion alternatif/continu (3) dans la pluralité (N) de modules (1), et des éléments à filtre connectés sur le côté sortie du module (1) sont stockés dans un unique réservoir d'huile d'isolation (7), des câblages dans les modules respectifs (1), entre les modules (1), et entre le module (1) et l'élément à filtre sont connectés dans le réservoir d'huile d'isolation (7), et une borne à courant alternatif (21) pour l'entrée, et une douille à courant continu (22) pour la sortie sont disposées à l'extérieur du réservoir d'huile d'isolation (7).

5. Appareil de conversion de puissance selon la revendication 4, dans lequel les unités de conversion alternatif/continu (3) dans le module (1), parmi la pluralité (N) de modules (1) qui sont les plus proches d'un potentiel de masse, sont disposées à l'extérieur du réservoir d'huile d'isolation (7).

6. Appareil de conversion de puissance selon l'une quelconque des revendications 4 et 5, dans lequel un enroulement du côté entrée (42a) et un enroulement du côté sortie (42b) du transformateur (4) dans chacun des modules (1) sont alternativement enroulés tout en étant tenus écartés d'une distance prédéterminée pour l'isolation.

7. Appareil de conversion de puissance selon l'une quelconque des revendications 4 à 6, dans lequel chacun de l'enroulement du côté entrée (42a) et de l'enroulement du côté sortie (42b) du transformateur (4) dans les modules respectifs (1) est fait d'un matériau conducteur ayant sensiblement une section transversale rectangulaire, et est revêtu avec un papier isolant à titre de matériau d'isolation.

8. Appareil de conversion de puissance selon l'une quelconque des revendications 4 à 7, dans lequel chaque extrémité terminale de l'enroulement du côté entrée (42a) et de l'enroulement du côté sortie (42b) du transformateur (4) dans les modules respectifs (1) est dotée d'une électrode (P-1, P-2, S11a-S13a, S21a-S23a) qui se projette vers le haut ou vers le bas, et un matériau conducteur avec une superficie de section transversale prédéterminée est utilisé pour la connexion entre les électrodes (S11a-S13a, S21a-S23a).

9. Appareil de conversion de puissance selon l'une quelconque des revendications 4 à 8, dans lequel le transformateur (4) dans chacun des modules (1) est soumis à une excitation à une haute fréquence égale ou supérieure à la fréquence commerciale, et un noyau en fer (41) du transformateur (4) est un noyau en fer à enroulement (41) formé en enroulant une pluralité de matériaux magnétiques minces semblables à des rubans.

10. Appareil de conversion de puissance selon l'une quelconque des revendications 4 à 9, dans lequel un alliage mince semblable à un ruban avec une structure amorphe contenant du fer à titre de composant principal ou une structure microcristalline est employé pour former le noyau en fer (41) du transformateur (4) dans le module (1).

11. Appareil de conversion de puissance selon l'une quelconque des revendications 4 à 10, dans lequel l'unité de conversion continu/alternatif du côté entrée (2) dans le module est sélectionnée parmi un groupe incluant un circuit inverseur du type à pont entier à deux niveaux, un circuit inverseur du type à demi-pont à trois niveaux, et un circuit inverseur du type à pont entier à trois niveaux, dont chacun inclut un dispositif de commutation (23), comme un IGBT et une diode.

12. Appareil de conversion de puissance selon l'une quelconque des revendications 4 à 11, dans lequel l'unité de conversion alternatif/continu du côté sortie (3) dans le module (1) est sélectionnée parmi un groupe incluant un circuit convertisseur du type à pont entier à deux niveaux, un circuit convertisseur du type à demi-pont à trois niveaux, un circuit convertisseur du type à pont entier à trois niveaux, dont chacun inclut un module de commutation (23), comme un IGBT et une diode, et un circuit redresseur constitué par la diode.

13. Système de génération à turbine éolienne comprenant l'appareil de conversion de puissance selon l'une quelconque des revendications 4 à 12, dans lequel un boîtier (50) qui stocke les unités de conversion continu/alternatif du côté entrée (2) des modules (1), et un réservoir d'huile d'isolation (7) qui stocke les transformateurs (4) et les unités de conversion alternatif/continu du côté sortie (3) de tous les modules (1) et les éléments à filtre sont disposés dans une tour de génération à turbine éolienne (12) construite sur la mer de telle sorte que la puissance générée par la tour de génération à turbine éolienne (12) est convertie en une puissance à courant continu pour la distribution.

14. Système de génération à turbine éolienne comprenant l'appareil de conversion de puissance selon l'une quelconque des revendications 4 à 12, dans lequel les sorties de puissance en courant continu provenant de la pluralité de tours de génération à turbine éolienne (12) construites sur la mer sont connectées en parallèle et rassemblées à un emplacement unique au moyen d'une pluralité de coupe-circuits à courant continu (17) pour la transmission de la puissance en courant continu vers la terre.

15. Système de génération à turbine éolienne comprenant l'appareil de conversion de puissance selon l'une quelconque des revendications 4 à 12, dans lequel les sorties de puissance en courant continu provenant de la pluralité de tours de génération à turbine éolienne (12) construites sur la mer sont rassemblées sur une plate-forme (16) disposée sur la mer via une pluralité de coupe-circuits à courant continu (17), et un second appareil de conversion de puissance prévu sur la plate-forme (16) convertit la puissance en une unique puissance système en courant continu pour la transmission de puissance vers la terre.
